# EUROPÄISCHE PATENTSCHRIFT

(11) **EP 2 812 246 B1**
(45) Veröffentlichungstag und Bekanntmachung des Hinweises auf die Patenterteilung: **12.12.2018**
(21) Anmeldenummer: 13704073.9
(22) Anmeldetag: 08.02.2013
(51) Int. Cl.: B64D 9/00

(54) **FLEXIBLES SKALIERBARES FRACHTLADESYSTEM**
FLEXIBLE SCALABLE FREIGHT LOADING SYSTEM
SYSTEME DE CHARGEMENT DE FRET FLEXIBLE ET MODULABLE

(30) Priorität: 10.02.2012 DE 102012002485
(43) Veröffentlichungstag der Anmeldung: 17.12.2014
(73) Patentinhaber: Airbus DS Airborne Solutions GmbH, 28309 Bremen (DE)
(72) Erfinder: MAKRINUS, Stefan, 28357 Bremen (DE); PAULSEN, Alf, 26121 Oldenburg (DE); ZISCHOW, Ekkehard, 28816 Stuhr (DE)
(74) Vertreter: Greif, Thomas
(86) Internationale Anmeldenummer: PCT/EP2013/052529
(87) Internationale Veröffentlichungsnummer: WO 2013/117690

(56) Entgegenhaltungen:
- EP-A1- 2 455 310
- WO-A1-2004/067416
- WO-A1-2012/104370
- WO-A2-2006/102691
- DE-A1-102005 040 408
- DE-A1-102009 037 982

## Beschreibung

Aus der DE 10 2005 040 408 A1 ist ein skalierbares Frachtladesystem, insbesondere für ein Luftfahrzeug, sowie ein Verfahren zum Betrieb eines solchen skalierbaren Frachtladesystems bekannt, wobei das Frachtladesystem Antriebsmittel, Überdeckungssensoren, Riegel, Näherungsschalter, Mensch - Maschinen - Interfaces und eine zentrale Steuereinrichtung aufweist, wobei die Ladefläche in Sektoren aufgeteilt ist, wobei in jedem Sektor eine lokale Steuereinheit zugeordnet ist, wobei die Fördermittel, Überdeckungssensoren und Näherungsschalter eines Sektors an Ein-Ausgabe-Schnittstellen der lokalen Steuereinheit angeschlossen sind und die lokalen Steuereinheiten über ein Bussystem mit der zentralen Steuereinheit verbunden sind.

Bei diesem bekannten skalierbaren Frachtladesystem, auf dem die Erfindung aufbaut, ist in der zentralen Steuereinrichtung und, soweit erforderlich, in den lokalen Steuereinheiten, eine Software abgespeichert, mit dem der Betrieb des Frachtladesystems gesteuert wird. Dabei ist die Software in den bekannten existierenden Frachtladesystemen statisch, das heißt einem jeweiligen Frachtladesystem mit seinen Komponenten ist den Gegebenheiten in dem Fahrzeug oder der Plattform, in dem das Frachtladesystem installiert ist, fest zugeschrieben. Dies hat zur Folge, dass die in der Software abgelegten Steuerbefehle nicht geändert werden können, da sie fest abgespeichert sind. Eine Änderung hat zur Folge, dass die neue Software mit ihren Steuerbefehlen nicht nur aufwendig in die Steuereinheiten geladen werden muss, sondern auch eine Anpassung der Software und vor allen Dingen auch in nachteiliger Weise eine Modifikation der Gerätezertifizierung, das heißt Genehmigung, durch den Hersteller oder Betreiber des Fahrzeuges bzw. der Plattform erfolgen muss. Damit ist der Nachteil gegeben, dass eine Änderung der betroffenen Komponenten Anpassungen der Hardware des Frachtladesystems einschließlich deren Software sowie deren gemeinsamen Zertifizierung erfolgen müssen, wenn während des Betriebes des Fahrzeuges funktionale Unverträglichkeiten oder Fehler auftreten, oder auch gewünschte Modifikationen durchgeführt werden.

Diese Statik der Software in existierenden Frachtladesystemen führt somit zu einer Unflexibilität während des Betriebes des Frachtladesystemes. Soll die Flexibilität erhöht werden, führt eine Änderung der Software und der damit verbundenen Hardware bzw der Software basierten Geräte zu einer Steigerung der Kosten hinsichtlich Zertifizierungs- und logistischen Aspekten.

Die WO 2006/102 691 A2 betrifft eine elektrisch dezentral steuerbare Fördervorrichtung für stückhaftes Fördergut sowie ein daraus zusammengesetztes Fördersystem. Zumindest eine Fördervorrichtung umfasst dabei eine elektrisch steuerbare Antriebsvorrichtung für wenigstens ein Förderorgan und/oder zumindest eine elektrotechnische Erfassungsvorrichtung für betriebsrelevante Zustände, wobei die Antriebsvorrichtung und/oder die Erfassungsvorrichtung mit einer elektrischen Steuervorrichtung zur Steuerung der Abläufe der Fördervorrichtung verbunden sind. Mindestens eine Steuervorrichtung weist dabei zumindest drei, bevorzugt vier, funktional identisch bzw. einheitlich ausgeführte Kommunikationsschnittstellen zur datentechnischen Anbindung an kommunikationskompatible Steuervorrichtungen bevorzugt unmittelbar benachbarter bzw. die Förderstrecke fortsetzender Fördervorrichtungen auf. Zudem ist eine Erfassungsvorrichtung zur Ermittlung der Formstabilität und/oder eines Antriebsschlupfes eines zu fördernden Fördergutes angegeben.

Die DE 10 2009 037 982 A2 betrifft ein Frachtlade- und Überwachungssystem für ein Flugzeug mit einer Vielzahl von separaten Frachtkammem, wobei das System aufweist: (a) einen ersten Prozessor; (b) eine Vielzahl von Kraftantriebseinheiten innerhalb einer ersten Frachtkammer, wobei eine jede Kraftantriebseinheit mit dem ersten Prozessor verbunden ist; (c) mindestens einen Sensor in der ersten Frachtkammer, wobei der Sensor ausgebildet ist, um die Position eines Frachtcontainers innerhalb der ersten Frachtkammer nachzuweisen; (d) einen zweiten Prozessor in Verbindung mit dem ersten Prozessor, den Kraftantriebseinheiten und dem Sensor, wobei der zweite Prozessor funktionsfähig ist, um eine Information vom ersten Prozessor, den Kraftantriebseinheiten und dem Sensor zu empfangen; (e) wobei der zweite Prozessor eine Anzeigeeinrichtung für die Frachtüberwachung aufweist, die sich in einer zweiten Frachtkammer befindet, die von der ersten Frachtkammer separat ist, wobei die Anzeigeeinrichtung für die Frachtüberwachung ausgebildet ist, um selektiv eine Information anzuzeigen, die vom Frachtladeprozessor, den Kraftantriebseinheiten und dem Sensor empfangen wird.

Der Erfindung liegt daher die Aufgabe zugrunde, ein skalierbares Frachtladesystem für Fahrzeuge, insbesondere für Luftfahrzeuge, zu schaffen, mit dem die Flexibilität ohne weitere Kostensteigerung erhöht wird.

Daher ist erfindungsgemäß vorgesehen, dass die zentrale Steuereinrichtung (DCB) mit einer Schnittstelle versehen und dazu ausgebildet ist, dass über die Schnittstelle die in einer lokalen Steuereinheit (CCB, SCB 1-x) oder weiteren an das Bussystem angeschlossenen elektronischen Komponenten, wie weiteren funktional ergänzenden Controllern, abgespeicherte Steuersoftware für einen an die Schnittstelle anschließbaren zentralen Luftfahrzeug-Server (LFZ-Server) zugänglich ist und verändert werden kann, indem Software-Änderungen, die über eine standardisierte Ladeprozedur auf die zentrale Steuereinrichtung geladen werden, anschließend von dieser über das Bussystem (CAN-Bus) verteilt werden,

Es wird somit vorteilhaft möglich über eine autonome Instanz, einen zentralen Server, über eine Verbindung zwischen dieser und der zentralen Steuereinrichtung beziehungsweise den lokalen Steuereinheiten eine geänderte oder auch eine komplett neue Steuersoftware aufzuspielen. Das heißt, dass sich das Problem der statischen Software dadurch lösen lässt, indem die Software mit ihren Steuerbefehlen, die die Funktionalität weitgehend definiert, unabhängig von der Hardware der zentralen Steuereinrichtung und der lokalen Steuereinheiten eigener Teilnehmer besteht. Das heißt ferner, dass durch einen Softwareaustausch nicht das zentrale Steuersystem und oder die lokalen Steuereinheiten ausgetauscht werden müssen. Das heißt, deren Speichereinheiten mit fest einprogrammierter Steuersoftware wird unabhängig gemacht und ist nicht mehr Gerätebestandteil.

Die zu ladende Software setzt sich hierbei aus mehreren Teilen zusammen, die unterschiedliche Aufgaben erfüllen:
1. Eine Datei mit einer Applikations-Software des skalierbaren Frachtladesystems, die die Steuerbefehle zum Betreiben des skalierbaren Frachtladesystems enthält. Dieser funktionale Teil wird zentralisiert zur Verfügung gestellt.
2. Eine Konfigurationsdatei mit Konfigurationsdaten. Die Daten der Konfigurationsdatei steuern den physikalischen Aufbau des zu betreibenden Frachtladesystems (wie zum Beispiel Typ und Anzahl der Komponenten, Bauzustände der Komponenten, Anordnung der Komponenten im Laderaum des Fahrzeuges im logischen Kontext und dergleichen).
3. Eine Parameterdatei. Die Daten in der Parameterdatei steuern die Betriebsparameter der Komponenten des skalierbaren Frachtladesystems.

Die Dateien werden über eine Ladeprozedur auf das zentrale Steuerungsorgan (die zentrale Steuereinrichtung) des Frachtladesystems geladen. Insbesondere werden die Dateien entsprechend einer Ladeprozedur über ARINC 429 alternativ aber auch über den CAN-Bus auf die zentrale Steuerungseinrichtung des Frachtladesystems geladen.

Dieses verteilt die Dateien der Applikations-Software beziehungsweise deren Bestandteile und / oder die Daten der Konfigurationsdatei und / oder die Daten der Parameterdateien über den systemimmanenten Datenbus, insbesondere einen CAN-Bus.

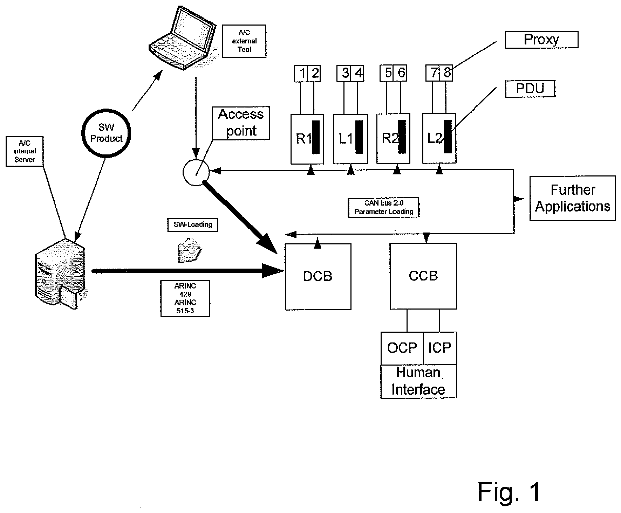

In Figur 1 ist der logische Aufbau eines Frachtladesystems dargestellt, das Änderungen der Software über den Server des Luftfahrzeugs (LFZ-Server) erhalten kann. Zum Fördern der Frachtstücke sind im Frachtraum des Flugzeugs mehrere ansteuerbare Förderelemente, sogenannte PDU's (Power Drive Units) angeordnet, bevorzugt in zwei Linien, die rechts und links im Frachtraum verlaufen. Weiterhin sind in jeder Linie Sicherungselemente, z.B. Riegel, angeordnet, die über Näherungsschalter (Proxy) überwacht werden.

Weiterhin ist eine Doorarea Control Box (DCB) vorhanden, von der die Kommunikation mit dem Flugzeug gesteuert wird und die als zentrale Steuereinrichtung dient. Eine Compartment Control Box CCB dient als Steuereinrichtung für energietechnische Funktionen. An die CCB können verschiedene Mensch-Maschine-Interfaces OCP, ICP angeschlossen werden. Eine Reihe von lokalen Steuereinheiten (Sector Control Boxes SCB 1-x) steuert die Elemente in einzelnen Sektoren des Frachtraums.

Die zentrale Steuereinheit DCB, die Steuereinheit CCB, die lokalen Steuereinheiten SCB und die steuerbaren Förderelemente PDU sind über ein Bussystem, vorzugsweise einen CAN-Bus, miteinander verbunden. Die zentrale Steuereinrichtung und die jedem Sektor zugeordnete lokale Steuereinheit sind mit einer Schnittstelle versehen. Über die Schnittstelle kann die in einer Speichereinheit der zentralen Steuereinrichtung oder der lokalen Steuereinheit abgespeicherte Steuersoftware zugänglich und veränderbar gemacht werden.

Der LFZ-Server ist über einen Datenbus an die Doorarea Control Box DCB via ARINC 429 an das Frachtladesystem anschließbar. Die Daten werden dabei entsprechend einer standardisierten Ladeprozedur nach dem Standard ARINC 429 oder ARINC 515-3 oder auch CAN-Bus spezifisch auf das zentrale Steuerungsorgan des Frachtladesystems geladen. Die DCB verteilt die Applikations-Softwaredateien und/oder die Konfigurations- und/oder Parameter-Dateien über den systemimmanenten Datenbus (CAN-Bus).

Alternativ zum LFZ-Server können die Softwareänderungen über einen Frachtraum spezifischen Accesspoint, der über einen Datenbus anschließbar ist, in das Frachtladesystem eingegeben werden.

Bevorzugt ist das Frachtladesystem so gestaltet, dass eine Softwareänderung modular erfolgen kann. Dies bedeutet, dass sowohl ausschließlich alle Softwaresegmente gemeinsam oder individuelle Softwaresegmente für die Applikationsfunktionen, und / oder das Softwaresegment für die Konfiguration des Frachtladesystems und der Anordnung seiner Komponenten, und / oder das Softwaresegment für die Performancemerkmale der Systemkomponenten einzeln geändert werden können.

## Patentansprüche

1. Skalierbares Frachtladesystem für ein Luftfahrzeug mit einer Ladefläche, die in Sektoren aufgeteilt ist, mit
- Förderelementen für Frachtstücke (PDU) für jeden Sektor,
- Sicherungselementen für Frachtstücke, insbesondere Riegeln, für jeden Sektor,
- einer zentralen Steuereinrichtung (DCB) zur Steuerung der Förder- und Sicherungselemente,
- lokalen Steuereinheiten (SCB 1-x), die jeweils einem Sektor zugeordnet sind, und
- einem Bussystem (CAN-Bus), über das die Förder- und Sicherungselemente (PDU) und die lokale Steuereinheit (SCB 1-x) eines Sektors jeweils mit der zentralen Steuereinrichtung (DCB) verbunden sind, **dadurch gekennzeichnet, dass**
die zentrale Steuereinrichtung (DCB) mit einer Schnittstelle versehen und dazu ausgebildet ist, dass über die Schnittstelle die in einer lokalen Steuereinheit (CCB, SCB 1-x) oder weiteren an das Bussystem angeschlossenen elektronischen Komponenten, wie weiteren funktional ergänzenden Controllern, abgespeicherte Steuersoftware für einen an die Schnittstelle anschließbaren zentralen Luftfahrzeug-Server (LFZ-Server) zugänglich ist und verändert werden kann, indem Software-Änderungen, die über eine standardisierte Ladeprozedur, insbesondere über ARINC 429 oder ARINC 515-3 oder auch Can- Bus spezifisch auf die zentrale Steuereinrichtung geladen werden, anschließend von dieser über das Bussystem (CAN-Bus) verteilt werden.

2. Verfahren zum Betreiben des skalierbaren Frachtladesystems nach Anspruch 1 in einem Luftfahrzeug mit einer Ladefläche, die in Sektoren aufgeteilt ist, und einem zentralen Luftfahrzeug-Server, der an die Schnittstelle angeschlossen ist,
wobei Software-Änderungen von dem zentralen Luftfahrzeug Server über eine standardisierte Ladeprozedur, insbesondere über ARINC 429 oder ARINC 515-3 oder auch Can- Bus spezifisch auf die zentrale Steuereinrichtung geladen werden und anschließend von dieser über das Bussystem (CAN-Bus) verteilt werden.

3. Verfahren nach Anspruch 2,
wobei eine Softwareänderung modular erfolgt, indem einzelne Softwaresegmente des Frachtladesystems geändert werden.

## Claims

1. Scalable freight loading system for an aircraft having a loading area which is divided into sectors, with
- conveyor elements for pieces of freight (PDU) for each sector,
- securing elements for pieces of freight, in particular latches, for each sector,
- a central control device (DCB) for controlling the conveyor and securing elements,
- local control units (SCB 1-x) which are each assigned to a sector, and
- a bus system (CAN bus) which is used to respectively connect the conveyor and securing elements (PDU) and the local control unit (SCB 1-x) of a sector to the central control device (DCB),
**characterized in that**
the central control device (DCB) is provided with an interface and is configured such that, via the interface, the control software stored in a local control unit (CCB, SCB 1-x) or in further electronic components connected to the bus system, such as further functionally complementary controllers, is accessible to a central aircraft server (aircraft server) connectable to the interface and can be changed by virtue of software changes which are loaded onto the central control device using a standardized loading procedure, in particular using ARINC 429 or ARINC 515-3, or else in a CAN-bus-specific manner are then distributed by the central control device via the bus system (CAN bus).

2. Method for operating the scalable freight loading system according to Claim 1 in an aircraft having a loading area which is divided into sectors and a central aircraft server which is connected to the interface, wherein software changes are loaded by the central aircraft server onto the central control device using a standardized loading procedure, in particular using ARINC 429 or ARINC 515-3, or else in a CAN-bus-specific manner and are then distributed by the central control device via the bus system (CAN bus).

3. Method according to Claim 2,
wherein a software change is carried out in a modular manner by changing individual software segments of the freight loading system.

## Revendications

1. Système de chargement de fret évolutif pour un aéronef, comportant une zone de fret divisée en secteurs, comprenant
- des éléments de convoyage du fret (PDU) pour chaque secteur,
- des éléments de retenue du fret, en particulier des verrous, pour chaque secteur,
- un dispositif de commande central (DCB) pour la commande des éléments de convoyage et de retenue,
- des unités de commande locales (SCB 1-x), respectivement affectées à un secteur, et
- un bus système (CAN-Bus) par l'intermédiaire duquel les éléments de transport et de retenue (PDU) et l'unité de commande locale (SCB 1-x) d'un secteur sont respectivement reliés au dispositif de commande central (DCB),
**caractérisé en ce que** le dispositif de commande central (DCB) est muni d'une interface et est conçu de manière à ce que le logiciel de commande stocké dans une unité de commande locale (CCB, SCB 1-x) ou d'autres composants électroniques connectés au système de bus, tels que des contrôleurs fonctionnels complémentaires, soient accessibles à un serveur aéronautique central (serveur d'aéronef) au niveau de l'interface et puissent être modifiés en chargeant des modifications logicielles spécifiques dans le dispositif de commande central par l'intermédiaire d'une procédure de chargement normalisée, en particulier par l'intermédiaire d'un bus ARINC 429 ou ARINC 515-3 ou encore Can-Bus, qui sont ensuite réparties par le dispositif de commande central par l'intermédiaire du bus système (CAN-Bus).

2. Procédé pour faire fonctionner le système de chargement de fret évolutif selon la revendication 1 dans un aéronef, comportant une zone de fret divisée en secteurs et un serveur central d'aéronef connecté à l'interface,
dans lequel les modifications logicielles sont spécifiquement chargées par le serveur central d'aéronef par l'intermédiaire d'une procédure de chargement normalisée, en particulier par l'intermédiaire d'un bus ARINC 429 ou ARINC 515-3 ou également Can-Bus, sur le dispositif de commande central et sont ensuite réparties par ce dernier par l'intermédiaire du bus système (CAN-Bus) .

3. Procédé selon la revendication 2,
dans lequel une modification logicielle est effectuée de manière modulaire, en modifiant des segments logiciels individuels du système de chargement de fret.
